Europäisches Patentamt

(19) European Patent Office

Office européen des brevets

(11) Numéro de publication: **0 1 1 1 431**
**B1**

(12) **FASCICULE DE BREVET EUROPEEN**

(51) Int. Cl.⁴: **B 60 M 1/24**

(45) Date de publication du fascicule du brevet:
11.06.86

(21) Numéro de dépôt: 83402279.0

(22) Date de dépôt: 25.11.83

(54) **Dispositif de suspension de fil de contact aérien alimentant des véhicules à traction électrique.**

(30) Priorité: 08.12.82 FR 8220560

(43) Date de publication de la demande:
20.06.84 Bulletin 84/25

(45) Mention de la délivrance du brevet:
11.06.86 Bulletin 86/24

(84) Etats contractants désignés:
BE CH DE IT LI

(56) Documents cités:
CH - A - 454 209
DE - C - 534 484
FR - A - 680 896
FR - A - 997 755
FR - A - 1 016 249
US - A - 1 402 000

(73) Titulaire: **C. Delachaux, 119, Avenue Louis-Roche,
F-92231 Gennevilliers (FR)**

(72) Inventeur: **Ruellan, André, 4 rue de la Libération,
F-95880 Enghien les Bains (FR)**

(74) Mandataire: **Martin, Jean-Jacques et al, Cabinet
REGIMBEAU 26, Avenue Kléber, F-75116 Paris (FR)**

## Description

La présente invention concerne l'alimentation des véhicules à traction électrique par fils de contact aériens, tels que les tramways, trolleybus, ou encore les véhicules à traction électrique de transport en commun dénommés métros légers.

La présente invention s'applique en particulier à l'alimentation des véhicules à traction électrique comportant une prise de courant par pantographe.

Plus précisément, la présente invention concerne un dispositif de suspension du fil de contact aérien alimentant de tels véhicules à traction électrique.

Dans la pratique, les lignes de fil de contact aérien ne sont jamais parfaitement rectilignes.

En effet, d'une part, les véhicules électriques de transport en commun sont souvent installés dans les agglomérations urbaines, et doivent, la plupart du temps, suivre les couloirs de circulation prévus pour les autres types de véhicules.

D'autre part, on s'arrange, lors de l'installation, pour que la ligne ne soit pas rectiligne, de telle sorte que le dispositif qui assure la liaison électrique entre le conducteur aérien et le récepteur mobile, généralement un pantographe, ne frotte pas toujours au même endroit sur la caténaire, de façon à éviter une usure rapide de la semelle dudit pantographe.

Pour ces raisons, il est nécessaire de prévoir des systèmes adaptés pour équilibrer la tension radiale imposée au fil de contact, au niveau des courbes présentées par ce dernier.

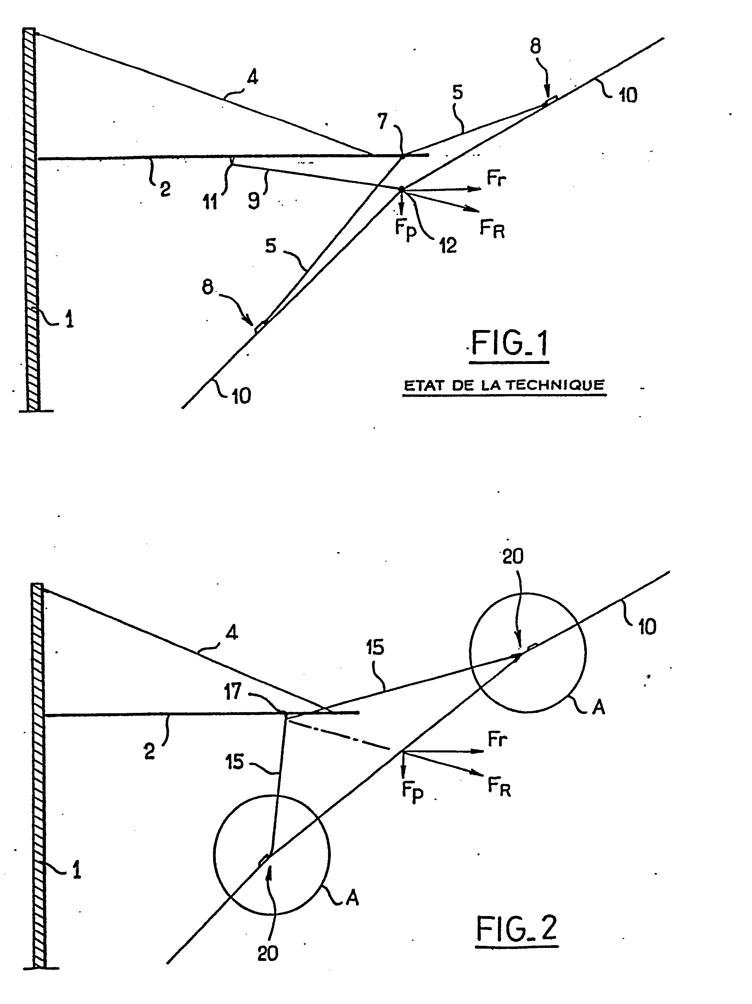

On a ainsi représenté sur la figure 1 annexée, un système classique adapté pour équilibrer la tension radiale imposée à un fil de contact. Un tel système est représenté par exemple dans la publication "S.N.C.F. - LIGNES AERIENNES DE TRACTION ELECTRIQUES EN COURANT MONOPHASE 25 KV - 50 HZ - PRINCIPE ET MATERIEL-1979" page 127, figure 122.

On reconnaît sur cette figure 1, un poteau 1 généralement vertical, sur lequel est fixée une console 2 généralement horizontale. Ladite console 2 est en outre supportée par un hauban 4 reliant la partie supérieure du poteau 1 et l'extrémité libre de la console 2.

Le fil de contact porte la référence 10 sur la figure 1. Ce fil de contact 10 est supporté par l'intermédiaire d'un câble porteur 5 relié, d'une part, en son point milieu 7 à l'extrémité de la console 2, d'autre part, grâce à des attaches respectives 8, de part et d'autre de la console 2, au fil de contact 10.

Tel que cela a été précédemment indiqué, le système doit en outre être adapté pour équilibrer la tension radiale $F_R$ imposée au fil de contact. Plus précisément, le système doit être adapté pour équilibrer la tension $F_R$ résultant, d'une part, du poids F de la longueur du fil de contact 10 correspondant aux deux demi-portées encadrant le support 1, d'autre part, de la tension radiale pure $F_r$ imposée au fil de contact 10 dans le plan horizontal de celui-ci par rapport à l'axe de la voie ou à l'axe du matériel roulant.

Pour ce faire, tel que cela est représenté sur la figure 1, la solution classique consiste à prévoir un bras de rappel 9 articulé en 11 sur la console 2, de telle sorte que ce bras de rappel puisse pivoter dans un plan sensiblement vertical. En outre, le bras de rappel est relié, en 12, grâce à une pince d'attache, au niveau de son extrémité libre, au fil de contact 10. Plus précisément, le point de pivotement 11 du bras de rappel 9 sur la console 2 et la longueur du bras de rappel 9 sont déterminés de telle sorte que le bras de rappel 9 soit sensiblement situé dans le prolongement de la direction d'application de la résultante de la tension radiale $F_R$ précitée.

D'autre part, tel que cela est précisé dans la publication précitée, le point d'attache 7 du câble porteur 5, sur la console 2, est situé à l'aplomb de la pince d'attache 12 du bras de rappel 9 sur le fil de contact 10.

Dans la pratique, on constate que de tels bras de rappel adaptés pour équilibrer la tension radiale imposée au fil de contact 10 doivent être installés pratiquement à chaque suspension.

Bien entendu, on comprend aisément qu'une telle installation s'avère relativement coûteuse, surtout que dans bon nombre d'applications, on demande une double isolation du fil de contact par rapport à la terre, ce qui impose souvent de réaliser le bras de rappel en un matériau électriquement isolant. De plus, le bras de rappel, de par son poids propre, et du fait de la tension radiale agissant en un seul point du fil de contact crée un "point dur" qui diminue la souplesse de la ligne de contact ponctuellement sous la console; D'autre part, un tel bras de rappel s'avère peu satisfaisant sur le plan esthétique.

On a proposé pour résoudre ce problème, de supprimer le bras de rappel 9 et de supporter et rappeler le fil de contact 10 grâce à un câble porteur 5 relié, d'une part, en son milieu à la console 2, d'autre part, au fil de contact 10 de part et d'autre de la console 2, grâce à des griffes d'ancrages pincées sur le fil de contact 10 et munies d'un bras de suspension pivotant autour d'un axe vertical, bras à l'extrémité libre duquel sont raccordées les extrémités du câble porteur 5.

Dans un tel cas, le point d'attache du câble porteur sur la console n'est plus à l'aplomb du fil de contact.

Plus précisément, en fonction de l'importance de l'angle du fil de contact, le bras de suspension es pivoté autour de l'axe vertical d'un angle tel que l'effort de traction dû au câble porteur 5, passe par le point d'ancrage desdites griffes.

Une telle disposition ne peut donner pleinement satisfaction, d'une part, parce que le bras de suspension est le siège de contraintes élevées, et l'ensemble est de ce fait peu fiable, d'autre part, parce qu'il est alors nécessaire de régler, sur le terrain, la longueur du câble porteur 5, en fonction de l'importance de la courbe, et donc de sertir sur place les extrémités du câble porteur, ce qui s'avère long, coûteux et là encore, peu fiable.

Tel que cela est décrit et représenté dans le brevet Suisse n° 454 209 qui représente d'ailleurs, sur sa figure 2, en tant qu'état de la technique, un système généralement similaire à celui ci-dessus analysé, on a proposé pour résoudre ces inconvénients, des pinces munies d'un étrier relié à un support par l'intermédiaire d'un pendule.

Comme cela est indiqué dans le texte, l'étrier est incliné par rapport à la verticale, de telle sorte que le prolongement du pendule passe par l'axe du fil de contact.

De ce fait, il est nécessaire de desserrer les mâchoires des pinces en prise sur les fils de contact.

Il en résulte que le réglage est particulièrement difficile à réaliser puisque lesdites pinces ne sont fixées sur le fil de contact qu'à la fin du réglage.

Dans la pratique, on constate que ces dernières solutions sont peu utilisées en raison de leurs nombreux inconvénients, et la grande majorité des installations actuelles comportent des systèmes de suspension du type représenté sur la figure 1.

Comme cela est décrit également dans le brevet U.S. 1 402 000 et dans le brevet français 997 755 on a également proposé des dispositifs de suspension pour ligne aérienne comportant en combinaison des griffes adaptées pour être serrées sur le fil de contact et un pendule associé à celles-ci.

Plus précisément, les dispositifs décrits dans ces documents sont destinés à être utilisés pour le support d'un fil de contact à suspension caténaire, c'est-à-dire pour une ligne d'alimentation électrique comportant un câble porteur continu.

En conséquence, les pendules de suspension reliant le fil de contact au câble porteur sont montés perpendiculairement à l'un et à l'autre en étant réglables par rapport aux griffes de telle sorte que le plan de symétrie des griffes soit vertical quelque soit l'inclinaison du pendule de suspension, qui reste dans un plan vertical perpendiculaire au précédent, c'est-à-dire au plan de symétrie des griffes.

Outre le fait que le réglage de l'inclinaison du pendule, en fonction de la géométrie de la ligne, ne peut être opéré qu'avant serrage des griffes, de tels dispositifs ne sont utilisables qu'avec un câble porteur continu.

La présente invention vient maintenant proposer un nouveau dispositif de suspension de fil de contact aérien qui s'avère beaucoup plus simple et économique que les réalisations antérieures, tout en étant à la fois beaucoup plus esthétique, robuste et fiable et qui en particulier ne nécessite pas un câble porteur continu mais de simples consoles.

Plus précisément, le dispositif de suspension de fil de contact aérien alimentant des véhicules à traction électrique, conforme à la présente invention est du type comprenant un câble porteur relié, d'une part, sur une console, en son point milieu, d'autre part, sur le fil de contact, respectivement de chaque côté de la console, grâce à une griffe, tandis que selon l'invention la griffe se compose de deux mâchoires séparées susceptibles de serrer le fil de contact, les mâchoires définissant un logement généralement cylindrique d'axe parallèle à l'axe du fil de contact, et proche de celui-ci, ledit logement étant muni de dentures sur la majeure partie de sa périphérie interne, la griffe comprenant également une attache orientable qui présente une section munie sur un secteur angulaire donné de sa périphérie, de dentures complémentaires de celles dudit logement, de telle sorte que cette section puisse être introduite dans le logement selon une pluralité de positions angulaires prédéterminées et retenue dans celui-ci, sous la tension du câble porteur, en venant en appui contre une surface radiale présentée par ce logement, lesdites mâchoires étant conformées de telle sorte qu'il soit prévu, en regard du logement, un espace apte à recevoir la section dentée de l'attache orientable, de telle sorte que celle-ci puisse être orientée angulairement lorsque ladite section est repoussée parallèlement à l'axe du fil dans ledite espace avant d'être retirée dans le logement pour y être angulairement immobilisée, et ladite attache comprenant des moyens permettant l'accrochage du câble porteur.

Selon un premier mode de réalisation, l'attache orientable se compose d'une bride en forme de boucle ouverte présentant ladite section munie de dentures externes, à l'une de ses extrémités, et présentant à son autre extrémité, des moyens en forme de crochet destinés à pénétrer entre les mâchoires.

De préférence, les moyens en forme de crochet pénètrent entre les mâchoires sur une longueur supérieure à la longueur de ladite section munie de dentures externes.

De façon avantageuse, les moyens d'accrochage sont formés par la boucle de la bride.

Selon une autre variante de réalisation, ladite attache orientable se compose d'une tige légèrement coudée présentant à l'une de ses extrémités ladite section munie de dentures, et à son autre extrémité, les moyens d'accrochage.

Selon une autre caractéristique de la présente invention, le logement est muni d'une ouverture débouchant sur l'extérieur et présentant des dimensions suffisantes pour autoriser le passage de la tige de l'attache.

Selon une caractéristique préférentielle de la présente invention, la section dentée de l'attache orientable présente une surface radiale dirigée vers les moyens d'accrochage et adaptée pour venir en appui contre la surface radiale du logement. En outre, les moyens en forme de crochet prévus sur l'attache orientable présentent, de préférence, également une surface radiale dirigée vers les moyens d'accrochage et destinée à venir en appui contre l'extrémité des mâchoires.

Comme cela apparaîtra plus clairement à la lecture de la description qui va suivre, le dispositif de suspension conforme à la présente invention, permet de supprimer totalement et sans inconvénient le bras de rappel 9 et, d'autre part, d'utiliser des câbles porteurs de longueur constante, ce qui simplifie très notablement l'installation.

D'autres caractéristiques et avantages de la présente invention apparaîtront à la lecture de la description détaillée qui va suivre, et en regard des dessins annexés, donnés à titre d'exemples non limitatifs, et sur lesquels, la figure 1 ayant déjà été décrite,

- la figure 2 représente une vue schématique d'un caténaire utilisant les dispositifs de suspension conformes à la présente invention,

- la figure 3 représente une vue latérale agrandie d'une griffe de suspension conforme à la présente invention, référencée A sur la figure 2,

- la figure 4 représente une vue axiale d'une griffe de suspension conforme à la présente invention,;

- les figures 5a, 5b, 5c représentent respectivement une vue latérale, de dessus, et axiale d'une première mâchoire d'une griffe de suspension conforme à la présente invention,

- la figure 6 représente une vue en coupe de cette griffe selon le plan de coupe référence VI-VI sur la figure 5a,

- la figure 7 représente une vue en coupe de cette même griffe selon le plan de coupe référence VII-VII sur la figure 5a,

- la figure 8 représente une vue latérale de l'attache orientable conforme à une première variante de réalisation de la présente invention,

- la figure 9 représente une vue de l'attache orientable selon le plan de coupe référence IX-IX sur la figure 8;

- la figure 10 représente une vue de l'attache orientable selon le plan de coupe référencé X-X sur la figure 8;

- la figure 11 représente une vue latérale de la seconde mâchoire d'une griffe de suspension conforme à la présente invention;

- la figure 12 représente une vue de celle-ci selon le plan de coupe référencé XII-XII sur la fig.11,

- la figure 13 représente une vue latérale d'une griffe de suspension conforme à une variante de réalisation de la présente invention.

On reconnaît sur la figure 2, le poteau 1, la console 2, ainsi que le hauban 4, classiques. Là encore, le fil de contact porte la référence 10.

Tel que cela est représenté sur la figure 2, la Demanderesse a constaté qu'il était possible de supprimer le bras de rappel 9, en supportant et rappelant le fil de contact 10 à l'aide d'un câble porteur 15, de longueur constante, relié au fil de contact 10 à l'aide de dispositifs de suspension 20 conformes à la présente invention. Plus précisément, ledit câble porteur 15, est relié au niveau de ses extrémités, et grâce à des dispositifs de suspension 20, au fil de contact 10, et au niveau de son point milieu référencé 17, sur la console 2.

Plus précisément, pour équilibrer le système support ainsi proposé, il est indispensable que la direction d'application de la tension radiale $F_R$ précédemment indiquée, passe par le point commun 17 de liaison du câble porteur 15 sur la console 2.

En d'autres termes, la direction d'application de la tension radiale $F_R$ se situe dans le plan défini par le câble porteur 15, et la section du fil de contact 10 située entre les dispositifs de suspension 20. Ainsi, le câble porteur 15 se trouve constamment à l'état tendu et assure correctement son rôle de support et de rappel.

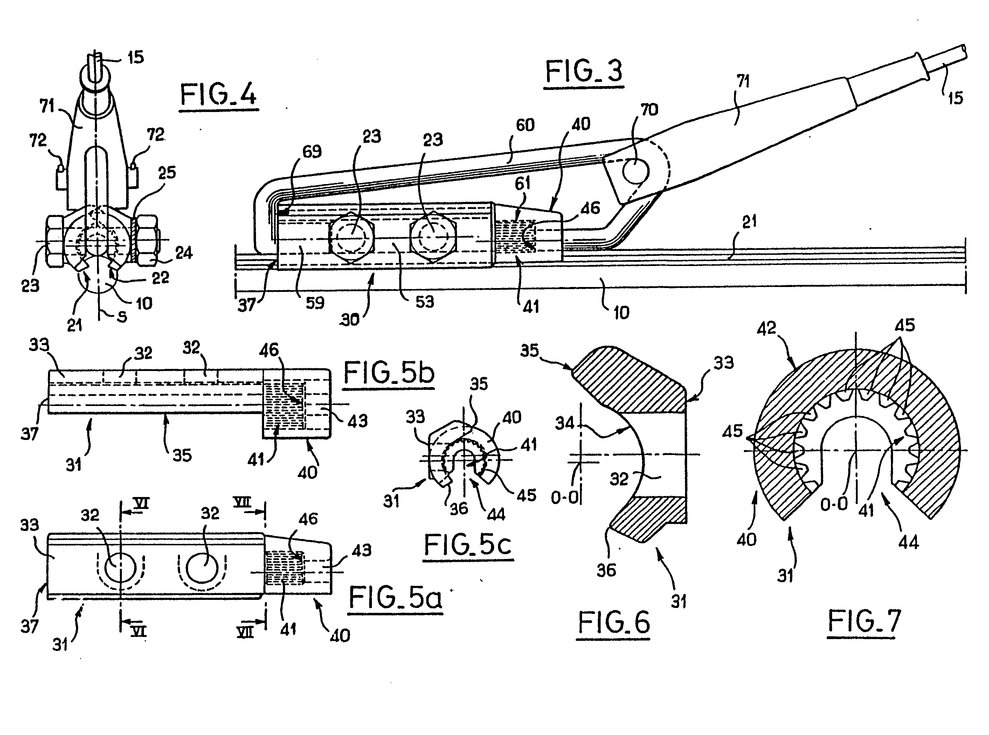

On va maintenant décrire, en regard des figures 3 à 12, le système de griffes 20 utilisé dans un dispositif de suspension pour câbles aériens conforme à la présente invention.

Le système de griffes 20 se compose, d'un ensemble de mâchoires 30 susceptibles de serrer le fil de contact 10, ainsi que d'une attache orientable 60 coopérant avec ledit ensemble.

De façon classique, et tel que cela est représenté en particulier sur la figure 4, sur laquelle on aperçoit le fil de contact 10 en coupe transversale, ce dernier est muni, sur toute sa longueur, de deux rainures 21, 22 non diamétralement opposées mais symétriques par rapport à un plan S-passant par l'axe du fil.

Bien entendu, tel que cela apparaît sur la figure 4, en particulier, le plan de symétrie S du fil 10 doit être constamment sensiblement vertical, de telle sorte que l'archet du pantographe, dont la génératrice supérieure s'étend généralement horizontalement, ne puisse en aucune façon frotter contre le dispositif de suspension du fil de contact 10, et ce malgré les oscillations inévitables occasionnées au pantographe.

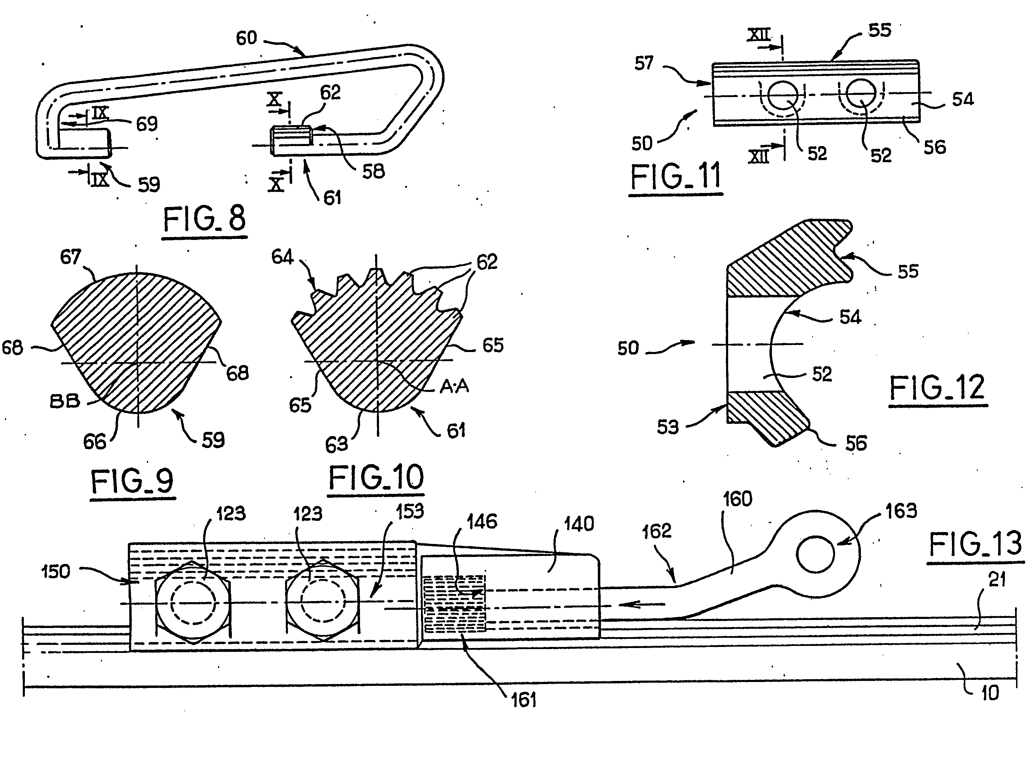

Tel que cela est représenté sur les figures 5, 6 et 7, ainsi que sur les figures 11 et 12, le système de mâchoires 30 est constitué de deux pièces séparées 31 et 50, représentées respectivement sur les figures 5 et 11. Ces deux pièces 31 et 50 forment des griffes de serrage, susceptibles d'être rapprochées grâce à deux boulons 23 traversant deux alésages 32 et 52 prévus respectivement dans les pièces 31 et 50, perpendiculairement au plan de symétrie du système de mâchoires 30, confondu avec le plan S précité, à l'état monté.

Plus précisément, le rapprochement des pièces 31 et 50 du système de mâchoires 30, est obtenu par serrage des écrous 24, représentés sur la figure 4, sur les boulons 23 précités, après interposition d'une rondelle à dents 25.

Selon le mode de réalisation représenté en coupe sur les figures 6 et 12, chacune des pièces 31 et 50 est délimitée, sur l'extérieur, par une surface plane 33, 53, et sur l'intérieur, par une surface cylindrique concave, 34, 54, d'un angle d'ouverture de l'ordre de 150°.

Lesdites parois cylindriques concaves intérieures 34, 54 forment en coopération avec le fil de contact 10, à l'état assemblé, une chambre dont le rôle sera expliqué plus en détail dans la suite de la description.

Au niveau de leur zone supérieure de contact, les pièces 31 et 50 sont avantageusement munies de structures complémentaires, saillie 35 pour la pièce 31, évidement 55 pour la pièce 50, aptes à définir un positionnement rapide et précis des deux pièces 31 et 50 l'une par rapport à l'autre, lors du serrage. Lesdits évidements 55 et saillie 35, s'étendent ainsi parallèlement à l'axe du fil de contact 10.

A l'opposé, au niveau de leur bord libre longitudinal inférieur, les pièces 31 et 50 sont munies de nervures striées 36, 56 complémentaires des rainures 21 et 22 prévues sur le fil de contact 10. Les nervures sont représentées non striées sur les figures. La forme des nervures 36, 56, ne sera pas décrite plus en détail ici, celle-ci sera aisément déterminée par l'homme de l'art en fonction de la forme particulière du fil de contact 10 normalisé retenu.

Bien entendu, pour tenir compte de l'épaisseur du fil de contact 10, les nervures 36, 56 destinées à pénétrer dans les rainures 21, 22 sont formées en retrait du plan de symétrie S, pris comme référence, par rapport aux saillie 35 et évidement 55 précités.

D'autre part, l'une des pièces, 31, qui sera dite griffe principale dans la suite de la description, se prolonge axialement par une structure 40, définissant un logement 41 adapté pour recevoir et retenir, l'attache orientable 60 précitée.

Comme cela est représenté en particulier, sur la figure 7, la structure 40 est délimitée extérieurement par une enveloppe 42 généralement cylindrique, et définit intérieurement, un logement sensiblement cylindrique 41, d'axe O-O parallèle à l'axe du câble électrique 10, lorsque le système de mâchoires 30 est serré sur celui-ci. D'autre part, le logement 41, qui débouche au niveau de la mâchoire 31, et dont la paroi cylindrique concave intérieure se trouve dans le prolongement de la paroi 34 précitée (de même rayon), se prolonge à l'opposé de la mâchoire 31, par un alésage cylindrique traversant 43, coaxial, et de plus faible diamètre, destiné à recevoir la tige circulaire de l'attache orientable 60, tel que cela est représenté par exemple sur la figure 3 de telle sorte que cette tige circulaire vienne en appui longitudinalement sur le fil de contact 10. La position des nervures 36, 56 sera aisément déterminée à cet effet.

Plus précisément, le logement 41 est défini par une enveloppe de révolution, sur un angle de l'ordre de 270°, autour de l'axe O-O.

Le logement 41 et l'évidement 43, débouchent sur l'extérieur de la pièce 31, du côté du fil de contact 10, grâce à une ouverture 44, prévue sur toute la longueur de ladite structure 40, symétriquement par rapport au plan de symétrie du système de mâchoires 31, 50, et présentant des dimensions suffisantes pour autoriser le passage de la tige de l'attache orientable 60. De préférence, la largeur de l'ouverture 44 égale le diamètre de la tige de l'attache orientable 60.

Comme cela est représenté également sur la figure 7, le logement 41, est muni sur sa périphérie, de dentures 45.

Telle que représentée sur les figures 8 à 10, l'attache orientable 60 se compose d'une bride en forme de boucle ouverte, présentant à l'une de ses extrémités, une section 61, munie sur un secteur angulaire de l'ordre de 75°, de dentures extérieures 62, aptes à coopérer avec les dentures 45 précitées, de telle sorte que cette section 61 de l'attache orientable 60, puisse être introduite et retenue dans le logement 41, selon une pluralité de positions angulaires prédéterminées.

Plus précisément, la section 61 précitée est délimitée par une enveloppe composée d'un premier secteur de paroi cylindrique 63, d'axe A-A confondu avec l'axe de la bride 60 et de même rayon que celle-ci, et d'un second secteur de paroi cylindrique 64, d'axe également A-A, mais de rayon plus important. Plus précisément, le rayon du secteur cylindrique 64 correspond au rayon du logement 41 de la structure 40 et le rayon du secteur 63 égale la distance séparant l'axe O-O de la génératrice supérieure du fil decontact 10, à l'état monté. Ce secteur de paroi cylindrique 64 est muni des dentures 62. Les parois cylindriques 63 et 64 sont reliées entre elles par des parois planes 65 tangentes à la paroi cylindrique 63.

On comprendra aisément, qu'ainsi, l'attache orientable 60 peut être pivotée autour de l'axe O-O jusqu'à ce que les surfaces planes 65 viennent tangenter le fil de contact 10.

D'autre part, tel que cela est représenté sur la figure 9, la seconde extrémité 59 de l'attache orientable 60, formée en regard de la section 61 précitée, est délimitée par une enveloppe composée de deux secteurs de parois cylindriques, 66 et 67, d'axe B-B coaxial à l'axe A-A précité, et présentant des rayons respectivement égaux à ceux des secteurs 63 et 64 précités. Les surfaces 66 et 67 sont, de même, raccordées entre elles par des parois planes 68, tangentes au secteur 66.

Cette seconde extrémité 59 de l'attache orientable 60, constitue des moyens en forme de crochet destinés à pénétrer entre les mâchoires 31, 50 puisque le rayon du secteur 67 égale le rayon de la surface cylindrique 34, 54 et que le secteur 66 vient en appui contre le fil de contact 10 quelle que soit l'inclinaison de l'attache 60, le rayon du secteur 66 étant égal à la distance séparant l'axe O-O de la génératrice supérieure du fil de contact.

Comme représentés figure 8, les moyens en forme de crochet présentent une surface radiale 69, destinée à venir en appui contre l'extrémité 37, 57 des mâchoires 30, opposée à la structure 40.

Ainsi, lorsque l'attache orientable 60 est introduite dans le système de mâchoires 30, la première extrémité 61 est en contact, d'une part, grâce aux dentures 62 avec les dentures 41, d'autre part, par l'intermédiaire de sa paroi cylindrique 63, avec le fil de contact 10, la seconde extrémité 59 étant quant à elle en contact par son secteur cylindrique 67, avec les parois cylindriques 34, 54 complémentaires, des mâchoires 31 et 50, et par son secteur cylindrique 66, avec le fil de contact 10. Ainsi, l'attache orientable 60, peut être maintenue rigidement, selon une pluralité de positions angulaires prédéterminées, autour de l'axe O-O. On peut ainsi pivoter l'attache de 60° de part et d'autre de la verticale.

Comme cela est représenté sur la figure 3, la boucle de l'attache orientable 60 est destinée à recevoir un axe 70, immobilisé dans la monture d'une chape 71 grâce à des goupilles d'arrêt 72 ou dispositifs analogues, les extrémités du câble porteur 15 étant immobilisées en 71.

En outre, comme représentée sur la figure 3, la boucle de l'attache orientable 60 est coudée de telle sorte que, en position assemblée, le prolongement des extrémités du câble porteur 15, passe par le point d'ancrage du système 30, sur le fil de contact 10, sensiblement entre les deux boulons 23 précités.

En outre, la distance séparant le boulon 23 de la structure 40, est supérieure à la longueur de la section 61 précitée de l'attache orientable, de telle sorte que les deux pièces 31 et 50 du système de mâchoires définissent entre elles, un espace apte à recevoir la section dentée 61 de l'attache orientable 60, de telle sorte que cette section 61 puisse être repoussée axialement entre les deux pièces 31 et 50, orientée angulairement puis retirée dans le logement 41 pour y être immobilisée grâce à la coopération entre lesdites dentures 41, 62.

De préférence, la seconde extrémité de l'attache orientable 60, formant crochet, pénètre entre les mâchoires 31, 50, sur une longueur supérieure à la longueur de ladite section 61 munie de dentures externes, de telle sorte que lorsque cette section dentée 61 de l'attache orientable 60 est repoussée entre les pièces 31 et 50, comme cela a été précédemment indiqué, l'attache orientable 60 se trouve malgré tout parfaitement guidée en pivotement autour de l'axe O-O.

En outre, tel que cela est représenté sur les figures 3 et 8, la section dentée 61 de l'attache orientable 60 présente une surface radiale 58 dirigée vers les moyens d'accrochage du câble porteur 15, et apte à venir en appui contre une surface radiale 46, présentée par le logement 41, au niveau de la zone de raccordement de celui-ci avec l'évidement 43.

On va maintenant décrire le mode d'installation du dispositif de suspension conforme à la présente invention.

Dans un premier temps, il convient d'introduire la section dentée 61 de l'attache orientable 60 dans l'espace défini entre les deux pièces 31 et 50, du système de mâchoires, en introduisant la tige de cette attache 60 dans l'ouverture 44, puis dans l'alésage 43. L'attache orientable 60 est alors pivotée sensiblement comme représenté figure 3. La griffe de serrage 50 est serrée sur la griffe principale 31, grâce aux écrous 24 de façon à immobiliser le système de mâchoires 30 sur le fil de contact 10. La section dentée 61 de l'attache orientable 60 étant disposée entre les deux pièces 31 et 50 du système de mâchoires, de façon à dégager les dentures 62 des dentures 45, il convient de choisir l'angle d'inclinaison de l'attache orientable 60 par rapport au plan de symétrie du système de mâchoires 31, 50 et donc du plan de symétrie S du fil de contact 10. L'attache orientable 60 est alors retirée axialement de telle sorte que la section 61 pénètre dans le logement 41. Le câble porteur 15 peut alors être solidarisé à la console 2 précitée, si cela n'est déjà fait.

Bien entendu, l'angle d'inclinaison de l'attache 60 par rapport au plan de symétrie S du système de mâchoires est déterminé, en fonction de l'importance de la courbe imposée au fil de contact 10, de telle sorte que, comme cela a été précédemment indiqué, la direction d'application de la résultante de la tension radiale passe par le point 17 d'accrochage du câble porteur 15 sur la console 2. Le dispositif de suspension se trouve alors parfaitement équilibré et stable.

On a représenté sur la figure 13, une variante de réalisation conforme à la présente invention.

Le système de mâchoires étant sensiblement identique au système de mâchoires 30 précédemment décrit, celui-ci ne sera pas décrit plus en détail. Plus précisément, les éléments du système de mâchoires représenté sur la figure 13, portent des références numériques augmentées de 100 par rapport aux éléments correspondants précédemment décrits.

L'attache orientable 160 représentée sur la figure 13, se compose d'une tige de section droite généralement circulaire, légèrement coudée en et présentant à l'une de ses extrémités (intérieure à la structure 140), une section 162 munie de dentures extérieures, et correspondant à la section 61 précitée, ainsi qu'à son autre extrémité, des moyens d'accrochage 163, en forme de boucle.

Cette dernière est bien entendu destinée à recevoir un axe immobilisé dans la monture d'une chape prévue aux extrémités du câble porteur 15.

Les pièces 31 et 50 formant mâchoire, ainsi que l'attache orientable 60 peuvent être réalisées par exemple en alliage de cuivre et d'aluminium.

Tel que cela a été précédemment décrit, il est important que l'axe de pivotement de la section 61 dans le logement 41 soit décentré et rapproché du fil de contact.

Bien entendu, la présente invention n'est pas limitée aux modes de réalisation qui viennent d'être décrits, à partir desquels on pourra envisager de nombreuses variantes conformes à la portée des revendications.

D'autre part, il convient de noter que la présente invention s'applique également à la griffe prise en elle-mème.

Enfin, la griffe qui vient d'être décrite, peut être utilisée non seulement au niveau des courbes présentées par le fil de contact, mais également pour soutenir les sections parfaitement rectilignes de celui-ci.

## REVENDICATIONS

1. Dispositif de suspension de fil de contact aérien pour l'alimentation de véhicules à traction électrique, du type comprenant un câble porteur (15) relié, d'une part, sur une console (2), en son point milieu (17), d'autre part, sur le fil de contact (10), respectivement de chaque côté de la console, grâce à une griffe (20), caractérisé par la combinaison des caractéristiques suivantes:

- la griffe se compose de deux mâchoires (31, 50) séparées susceptibles de serrer le fil de contact (10),

- les mâchoires (31, 50) définissant un logement (41) généralement cylindrique d'axe (O-O) parallèle à l'axe du fil de contact, et proche de celui-ci, ledit logement (4) étant muni de dentures (45) sur la majeure partie de sa périphérie interne,

-la griffe comprend également une attache orientable (60) qui présente une section (61) munie sur un secteur angulaire donné de sa périphérie, de dentures (62) complémentaires de celles dudit logement (41), de telle sorte que cette section (61) puisse être introduite dans le logement (41) selon une pluralité de positions angulaires prédéterminées et retenue dans celui-ci, sous la tension du câble porteur, en venant en appui contre une surface radiale (46) présentée par ce logement,

- il est prévu, en regard du logement (41), un espace apte à recevoir la section dentée (61) de l'attache orientable (60), de telle sorte que celle-ci puisse être orientée angulairement lorsque ladite section (61) est repoussée, parallèlement à l'axe du fil dans ledit espace avant d'être retirée dans le logement (41) pour y être angulairement immobilisée, et

- ladite attache (60) comprend des moyens permettant l'accrochage du câble porteur (15).

2. Dispositif selon la revendication 1, caractérisé par le fait que l'espace est défini entre les deux mâchoires (31, 50).

3. Dispositif selon l'une des revendications 1 et 2, caractérisé par le fait que l'attache orientable (60) se compose d'une bride en forme de boucle ouverte présentant ladite section (61) munie de dentures ex-ternes (62), à l'une de ses extrémités, et présentant à son autre extrémité (59) des moyens en forme de crochet destinés à pénétrer entre les mâchoires (31, 50).

4. Dispositif selon la revendication 3, caractérisé par le fait que les moyens (59) en forme de crochet pénètrent entre les mâchoires(31, 50) sur une longueur supérieure à la longueur de ladite section (61) munie de dentures externes (62).

5. Dispositif selon l'une des revendications 3 et 4, caractérisé par le fait que les moyens d'accrochage sont formés par la boucle de la bride (60).

6. Dispositif selon l'une des revendications 1 et 2, caractérisé par le fait que ladite attache orientable (160) se compose d'une tige légerement coudée (162) présentant à l'une de ses extrémités ladite section (161) munie de dentures et à son autre extrémité, les moyens d'accrochage (163).

7. Dispositif selon l'une quelconque des revendications 1 à 6, caractérisé par le fait que le logement (41) est muni d'une ouverture (44) débouchant sur l'extérieur et présentant des dimensions suffisantes pour autoriser le passage de la tige de l'attache (60).

8. Dispositif selon l'une quelconque des revendications 1 à 7, caractérisé par le fait que la section dentée (61) de l'attache orientable (60) présente une surface radiale (58) dirigée vers les moyens d'accrochage et apte à venir en appui contre la surface radiale (46) du logement (41).

9. Dispositif selon la revendication 8, prise en combinaison avec l'une quelconque des revendications 3 à 5, caractérisé par le fait que les moyens en forme de crochet (59) présentent également une surface radiale (69) dirigée vers les moyens d'accrochage et destinée à venir en appui contre l'extrémité (37, 57) des mâchoires (31, 50).

10. Dispositif selon la revendication 1, caractérisé par le fait que l'axe de pivotement de la section dentée (61) de l'attache orientable, dans le logemeht (41) est décentré et rapproché du fil de contact (10).

11. Griffe pour la suspension de fil de contact aérien, comme définie selon l'une quelconque des revendications 1 à 10.


**Patentansprüche**

1. Aufhängevorrichtung für Oberleitungsdraht zur Speisung von Fahrzeugen mit elektrischer Traktion mit einem Tragkabel (15), das einerseits an seinem Mittelpunkt (17) an einem Träger (2) und zu beiden Seiten des Trägers andererseits mit dem Oberleitungsdraht (10) mittels jeweils einer-Klemme (20) verbunden ist, <u>gekennzeichnet</u> durch die Kombination folgender Merkmale.

- die Klemme besteht aus zwei Backen (31, 50), der zum Ergreifen des Oberleitungsdrahts (10) geeignet ist,

- die Backen (31, 50) bilden eine im wesentlichen zylindrische Aufnahme (41), deren Achse (O-O) parallel zur Oberleitungsdrahtachse ist und nahe welcher die Aufnahme (4I) mit Zähnen (45) auf dem größten Teil ihres inneren Umfangs versehen ist,

- die Klemme enthält auch einen einstellbaren Halter (60), der einen Abschnitt (61) aufweist, der auf einem von seinem Umfang bestimmten Winkelabschnitt mit einer zu den Zähnen der Aufnahme (41) komplementären Zahnung (62) versehen ist derart, daß dieser Abschnitt (61) in die Aufnahme (41) in einer Mehrzahl von vorbestimmten Winkelpositionen eingeführt werden und in dieser unter der Spannung des Trägerkabels gehalten werden kann, indem er an eine radiale Fläche (46) in Anlage gelangt, die von der Aufnahme dargeboten ist,

- gegenüber der Aufnahme (41) ist ein freier Raum vorgesehen, der dazu eingerichtet ist, den gezahnten Abschnitt (61) des einstellbaren Halters (60) aufzunehmen derart, daß dieser im Winkel eingestellt werden kann, wenn der genannte Abschnitt (61) parallel zur Achse des Oberleitungsdrahtes in den genannten Raum zurückgestoßen wird, bevor er in die Aufnahme (41) zurückgezogen wird, um dort winkelmäßig festgelegt zu werden, und

- der genannte Halter (60) enthält Einrichtungen, die die Befestigung des Trägerkabels (l5) gestatten.

2. Vorrichtung nach Anspruch 1, dadurch gekennzeichnet, daß der freie Raum zwischen den zwei Backen (31, 50) ausgebildet ist.

3. Vorrichtung nach einem der Ansprüche 1 und 2, dadurch gekennzeichnet, daß der einstellbare Halter (60) aus einem Bügel in Form eines offenen Ringes besteht, der den genannten Abschnitt (61) enthält, der mit der äußeren Zahnung (62) an einem seiner Enden versehen ist und an seinem anderen Ende (59) Einrichtungen in Form eines Hakens aufweist, die zum Eindringen zwischen die Backen (31, 50) bestimmt sind.

4. Vorrichtung nach Anspruch 3, dadurch gekennzeichnet, daß die Einrichtungen (59) in Form eines Hakens zwischen die Backen (31, 50) auf eine Länge eintreten, die größer ist, als die Länge des Abschnittes (61), der mit der Zahnung (62) versehen ist.

5. Vorrichtung nach einem der Ansprüche 3 und 4, dadurch gekennzeichnet, daß die Verankerungseinrichtungen von dem Ring des Bügels (60) gebildet sind.

6. Vorrichtung nach einem der Ansprüche 1 und 2, dadurch gekennzeichnet, daß der einstellbare Halter (160) aus einer leicht abgewinkelten Stange (162) besteht, die an dem einen ihrer Enden den mit der Zahnung versehenen Abschnitt (161) und an ihrem anderen Ende die Verankerungseinrichtungen (163) aufweist.

7. Vorrichtung nach einem der Ansprüche 1 bis 6, dadurch gekennzeichnet, daß die Aufnahme (41) mit einer Öffnung (44) versehen ist, die nach außen mündet und die Abmessungen aufweist, die ausreichend sind, um den Durchtritt der Stange des Halters (60) zu ermöglichen.

8. Vorrichtung nach einem der Ansprüche 1 bis 7, dadurch gekennzeichnet, daß der gezahnte Abschnitt (61) des einstellbaren Halters (60) eine radiale Oberfläche (58) aufweist, die gegen die Verankerungseinrichtungen gerichtet ist und dazu geeignet ist, an die radiale Oberfläche (46) der Aufnahme (41) in Anlage zu kommen.

9. Vorrichtung nach Anspruch 8 in Kombination mit einem der Ansprüche 3 bis 5, dadurch gekennzeichnet, daß die Einrichtungen in Form des Hakens (59) ebenfalls eine radiale Oberfläche (69) aufweisen, die gegen die Verankerungseinrichtung gerichtet ist und dazu bestimmt ist, an das Ende (37, 57) der Backen (31, 50) in Anlage zu kommen.

10. Vorrichtung nach Anspruch 1, dadurch gekennzeichnet, daß die Schwenkachse des gezahnten Abschnitts (61) des einstellbaren Halters in der Aufnahme (41) exzentrisch ist und dem Oberleitungsdraht (10) angenähert ist.

11. Klemme für die Aufhängung des Oberleitungsdrahtes nach einem der Ansprüche 1 bis 10.

## Claims

1. A suspension system for an overhead contact wire for supplying electric traction vehicles, the system comprising a carrier cable (15) connected, on the one hand, on a support (2), at a mid point (17), on the other hand, on the overhead contact wire (10), respectively on each side of the support, by means of a clamp (20) characterized by the combination of the following characteristics:

- the clamp comprises two separate jaws (31,50) adapted to grip the contact wire (10);
- said jaws (31,50) define a generally cylindrical housing (41) having an axis (0-0) running parallel to the axis of the contact wire, said axis 0-0 being close to the axis of the contact wire, and said housing (4) having inwardly teeth (45) projecting from a major portion of its inside surface;
- said clamp comprises also a link member (60) having a part (61) provided on an angular portion of its outside surface with teeth (62) which are complementary of the teeth of the housing (41), whereby said part (61) may be set in the housing (41) in any one of a plurality of predetermined angles and restrained in said housing, by the traction of the carrier cable by abutting a radial surface (46) provided in the housing;
- a space adjacent to said housing (41) being provided for receiving said part (61) of the link member (60) so that said link member can be angularly directed when said part (61) is pushed parallely to the axis of the wire in the space before being drawed in the housing (41) to be angularly locked in this housing, and
- said link member (60) further includes fastening means for fastening to said carrier cable (15).

2. A suspension system according to claim 1, wherein said space is defined between said two jaws (31,50).

3. A suspension system according to one of claims 1 and 2, wherein said link member (60) comprises a C-shaped open loop of rod having said part (61) provided with outside teeth (62) at one of its ends and having hook-shaped means at its other end (59) suitable for insertion between said jaws (31,50).

4. A suspension system according to claim 3, wherein said hook-shaped means (59) extend between said jaws (31,50) over a greater distance than the length of said part (61) provided with outside teeth (62).

5. A suspension system according to one of claims 3 and 4, wherein said fastening means is constituted by said loop of rod (60).

6. A suspension system according to one of claims 1 and 2, wherein said link member (160) comprises a slightly bent rod (162) having said part (161) provided with teeth at one of its ends and having said fastening means (163) located at its other end.

7. A suspension system according to one of claims 1 to 6, wherein said housing (41) has a side opening (44) wide enough to pass a rod of said link member (60).

8. A suspension system according to one of claims 1 to 7, wherein said part (61) of the link member (60) includes a radially extending abutment surface (58) directed towards the fastening means and adapted to engage said radial surface (46) of the housing (41).

9. A suspension system according to claim 8 taken in combination with one of claims 3 to 5, wherein said hookshaped means (59) include also a radially directed surface (69) facing said fastening means and intended to come into abutment against an end surface (37, 57) of said jaws (31, 50).

10. A suspension system according to claim 1, wherein said axis of rotation O-O of said part (61) of the link member in said housing (41) is out of center and close to the contact wire (10).

11. A clamp for use in supporting an overhead contact wire and as defined in any one of claims 1 to 10.

FIG.1

FIG.2

1

FIG.4

15

71

72

72

25

23

24

22

21

10

S

FIG.3

71

15

60

40

70

23

23

69

61

46

37

59

53

41

10

30

21

FIG.5b

33

32

32

46

37

31

35

41

43

40

FIG.5a

33

32

32

46

37

31

41

40

43

VI

VII

VI

VII

FIG.5c

33

35

40

41

31

36

44

45

FIG.6

35

33

34

0-0

32

36

31

FIG.7

42

45

45

40

31

0-0

41

44

0 111 431

3

0 111 431

FIG_11

FIG_12

FIG_13

FIG.8

FIG.9

FIG.10